# EUROPÄISCHE PATENTSCHRIFT

(11) **EP 0 520 164 B1**
(45) Veröffentlichungstag und Bekanntmachung des Hinweises auf die Patenterteilung: **06.07.1994**
(21) Anmeldenummer: 92107676.6
(22) Anmeldetag: 07.05.1992
(51) Int. Cl.: F16B 39/08

(54) **Schraubenverbindung**
Threaded joint
Raccord à vis

(30) Priorität: 28.06.1991 DE 4121524
(43) Veröffentlichungstag der Anmeldung: 30.12.1992
(73) Patentinhaber: Daimler-Benz Aerospace Airbus Gesellschaft mit beschränkter Haftung, 21129 Hamburg (DE)
(72) Erfinder: Kirma, Safa, W-2000 Wedel/ Holstein (DE)
(74) Vertreter: Hansmann, Dierk, Dipl.-Ing.

(56) Entgegenhaltungen:
- DE-A- 3 410 873
- DE-C- 480 133
- DE-C- 1 067 640

## Beschreibung

Die Erfindung bezieht sich auf eine Schraubenverbindung mit einer formschlüssigen Muttersicherung bestehend aus einem oberen Mitnehmer, einer Feder und einem unteren Mitnehmer, wobei der obere Mitnehmer formschlüssig mit der Schraube und der untere Mitnehmer formschlüssig mit der Mutter verbunden ist, wobei der obere Mitnehmer und der untere Mitnehmer über die Feder drehelastisch miteinander verbunden sind und der obere Mitnehmer dadurch gegenüber dem unteren Mitnehmer oder umgekehrt, relativ verdreht werden kann.

Eine bekannte Lösung dieser Art ist der DE 34 10 873 A1 zu entnehmen. Gemäß den hier gezeigten Fign. 70 bis 76 wird eine Schraubenverbindung mit Hilfe einer Feder und durch Sicherungselemente mit Sperrzähnen derart gesichert, daß die Feder in montiertem Zustand ein festziehendes Moment auf die Mutter ausübt. Das hier entnehmbare Kupplungsstück übernimmt folgende Funktionen:
- In seinem Oberteil: Formschluß mit der Schraube (oberer Mitnehmer);
- In seinem Mittelteil: Eine elastische Verdrehbarkeit (Feder);
- In seinem Unterteil: Formschluß mit der Mutter (unterer Mitnehmer).

Hierbei ist das aus einem Oberteil, einem Mittelteil und einem Unterteil bestehende Kupplungsstück zur Formschlußbildung erforderlich. Der Oberteil weist Sperrarme mit einer Innenkerbverzahnung auf. Der Mittelteil ist als Drehfeder ausgebildet. Der Unterteil des Kupplungsstücks umfaßt eine der Mutter zugewandte Stirnfläche mit Sperrzähnen. Als Mutter wird eine mit einer Sperrverzahnung versehenen Sondermutter verwendet.

Bei dieser Lösung werden Zusatzteile verwendet, die nur mit hohem Fertigungsaufwand herstellbar sind. Dies gilt insbesondere für das genannte Kupplungsstück. Als weitere Eigenschaft dieser Lösung ist der große Platzbedarf in axialer Richtung zu nennen. Zur Montage dieser Verbindung ist u.a. ein Werkzeug erforderlich, das ein Auseinanderspreizen bzw. Zusammendrücken der besagten Sperrarme ermöglicht.

Demgemäß liegt der Erfindung die Aufgabe zugrunde, eine entsprechende Muttersicherung derart zu vereinfachen, daß die Sperrarme mit der Innenkerbverzahnung sowie die integrierte Drehfeder des Kupplungsstücks entfallen und der axiale Platzbedarf reduziert wird und eine Montage dieser Verbindung mit einfachen Werkzeugen möglich ist.

Diese Aufgabe wird bei einer Schraubenverbindung der vorgenannten Art durch die kennzeichnenden Merkmale des Anspruchs 1 gelöst, wobei der Mitnehmer aus zwei Hälften von identischer Geometrie besteht, wovon jede einen Bund aufweist, der stirnseitig mit radialen sägezahnförmigen Rippen versehen ist und jede Hälfte innen in Höhe des Bundes eine Scheibe mit einem Durchgangsloch für die Schraube und mit mindestens einer Aufnahmebohrung für die Nase aufweist.

Dabei ist insbesondere von Vorteil, daß zur Herstellung der betreffenden Schraubenverbindung außer üblichen Normteilen (Schraube mit Splintbohrung und einfache Mutter, beispielsweise Sechskantmutter) nur zwei Zusatzteile von unterschiedlicher Geometrie erforderlich sind. Diese Zusatzteile sind die beiden geometrisch identischen Mitnehmerhälften einerseits und die Formfeder andererseits. Ein weiterer Vorteil der vorgeschlagenen Lösung besteht darin, daß sich die betreffende Schraubenverbindung durch sehr einfache Maßnahmen mit einfachen Werkzeugen montieren läßt.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Schraubenverbindung mit einem zweiteiligen Mitnehmer und
- Fig. 2: die Ansicht II nach Fig. 1.

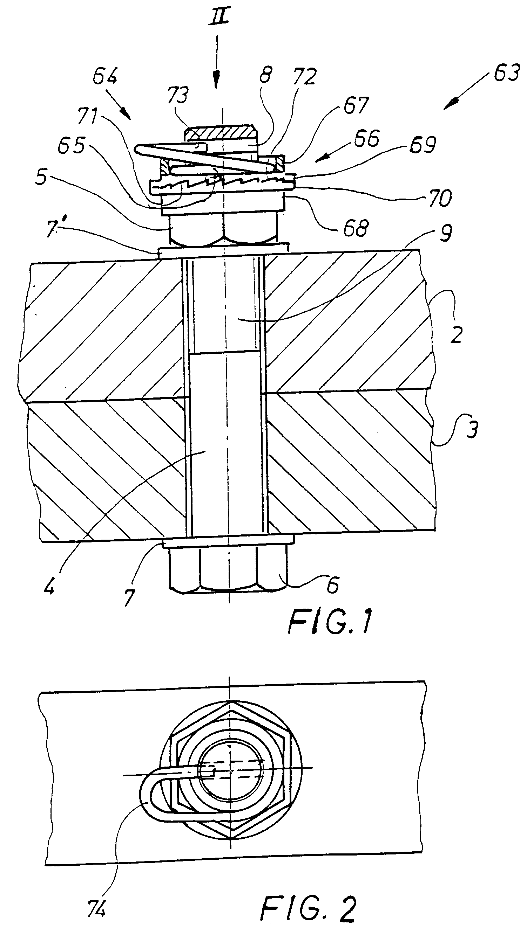

Die Figuren 1 und 2 zeigen eine Schraubenverbindung 1, bestehend aus zwei mittels einer Schraube 4 miteinander verspannten Teilen 2 und 3, wobei die Schraube 4 an ihrem mit einem Gewinde 9 versehenen Ende ein Splintloch 8 aufweist. Zwischen dem Schraubenkopf 6 und dem Teil 3 befindet sich eine Scheibe 7. Entsprechend ist zwischen der Mutter 5 und dem Teil 2 eine Scheibe 7′ angeordnet. Als drehelastisches Element ist eine Formfeder 64 vorgesehen, deren schraubenseitiges Ende eine radial nach innen zeigende Nase 73 aufweist. Dagegen weist das mutterseitige Ende der Formfeder 64 eine axial zur Mutter 5 hin gerichtete Nase 65 auf. Zur Verbindung der Formfeder 64 mit der Mutter 5 ist ein zweiteiliger Mitnehmer 66 vorgesehen. Dieser besteht aus zwei Hälften 67 und 68 von identischer Geometrie. Jede Hälfte 67,68 weist einen Bund 69,70 auf, der stirnseitig mit radialen sägezahnförmigen Rippen 71,72 versehen ist. Jede Hälfte 67,68 weist innen in Höhe des Bundes 69,70 eine Scheibe mit einem Durchgangsloch für die Schraube 4 auf. In den besagten Scheiben befindet sich jeweils mindestens eine axiale Aufnahmebohrung für die Nase 65. Beide Hälften 67,68 des Mitnehmers 66 sind so angeordnet, daß die Rippen 71,72 miteinander im Eingriff stehen. Infolge der Sägezahnform bilden die Hälften 67,68 ein Richtungsgesperre, das bei Betrachtung in Richtung II eine Drehung der Hälfte 67 gegenüber der Hälfte 68 nur entgegen dem Uhrzeigersinne zuläßt. Die Innenflächen der Hälften 67,68 sind der üblichen Außenkontur der Mutter 5 angepaßt. Die äußeren Umfangsflächen der Hälften 67,68 bis auf die Bunde 69,70 bilden jeweils einen Sechskant zum Ansetzen eines Maulschlüssels. Mit der Mutter 5 steht die Hälfte 68 im Eingriff. Die Montage dieser Sicherung erfolgt, wenn die Schraubenverbindung 63 mit einem vorbestimmten Anziehdrehmoment festgezogen ist. Dann werden die beiden Hälften 67,68, wie in Fig. 1 gezeigt, auf die Mutter 5 gesetzt bis der innere Teil des Bundes 70 an der freien Stirnfläche der Mutter 5 anliegt. Nun wird die Formfeder 64 so in die Hälfte 67 eingesetzt, daß die untere Nase 65 in einer der axialen Aufnahmebohrungen sitzt und die obere Nase 73 der Formfeder 64 in das Splintloch 8 eingreift. Dabei wird das Einsetzen der Nase 73 in das Splintloch 8 durch die grifförmige Ausbildung des Überganges 74 erleichtert. Nach dem Einsetzen der Formfeder 64 übt diese eine axiale Druckkraft auf die Hälften 67 und 68 aus. Mit Hilfe eines Maulschlüssels wird nun die Hälfte 67 entgegen dem Uhrzeigersinne gedreht, wodurch die Formfeder 64 gespannt wird und die Rippen beider Bunde 69,70 übereinander weggleiten. Beim Loslassen der Hälfte 67 greifen die Rippen 71,72 ineinander, so daß die Formfeder 64 jetzt über die Hälften 67 und 68 auf die Mutter 5 ein festziehendes Moment ausübt.

Die erfindungsgemäße Formfeder besteht zweckmäßig aus einem Federstahldraht. Es kann auch jedes andere geeignete Material verwendet werden. Die besagte Formfeder besteht üblicherweise aus einem Draht von rundem Querschnitt. Es sind aber auch andere geeignete Querschnittsformen wie quadratische oder rechteckige denkbar.

## Patentansprüche

1. Schraubenverbindung mit einer formschlüssigen Muttersicherung bestehend aus einem oberen Mitnehmer, einer Feder und einem unteren Mitnehmer, wobei der obere Mitnehmer formschlüssig mit der Schraube und der untere Mitnehmer formschlüssig mit der Mutter verbunden ist, wobei der obere Mitnehmer und der untere Mitnehmer über die Feder drehelastisch miteinander verbunden sind und der obere Mitnehmer dadurch gegenüber dem unteren Mitnehmer oder umgekehrt, relativ verdreht werden kann,
dadurch **gekennzeichnet,** daß die Feder (64) eine obere Nase (73) und eine untere Nase (65) aufweist und der obere Mitnehmer aus der oberen Nase (73) gebildet ist, die in ein Splintloch (8) der Schraube (4) eingreift und der untere Mitnehmer (66) aus zwei Hälften (67,68) von identischer Geometrie besteht, wovon jede einen Bund (69,70) aufweist, der stirnseitig mit einer in gegenseitigem Eingriff stehenden Sperrverzahnung (71,72) versehen ist und jede Hälfte (67,68) innen in Höhe des Bundes (69,70) eine Scheibe mit einem Durchgangsloch für die Schraube (4) und mindestens einer Aufnahmebohrung für die untere Nase (65) aufweist, wobei der Formschluß zwischen der Mutter (5) und dem unteren Mitnehmer dadurch erreicht wird, daß dieser einen der Außenform der Mutter (5) angepaßten Bereich aufweist.

2. Schraubenverbindung nach Anspruch 1,
dadurch **gekennzeichnet,** daß der der Außenform der Mutter (5) angepaßte Bereich des Mitnehmers einen Innensechskant bildet.

3. Schraubenverbindung nach Anspruch 1 oder 2,
dadurch **gekennzeichnet,** daß der der Außenform der Mutter (5) angepaßte Bereich des Mitnehmers eine Doppelsechskantform bildet.

## Claims

1. Screwed connection with a positive nut lock consisting of an upper engagement piece, a spring and a lower engagement piece, in which the upper engagement piece is positively connected to the screw and the lower engagement piece is positively connected to the nut, the upper engagement piece and the lower engagement piece are connected together in a torsionally elastic manner by means of the spring and the upper engagement piece can thereby be turned relative to the lower engagement piece or vice versa, characterised in that the spring (64) comprises an upper projection (73) and a lower projection (65), the upper engagement piece is formed from the upper projection (73), which engages in a split-pin hole (8) in the screw (4), the lower engagement piece (66) consists of two geometrically identical halves (67, 68), each of which comprises a collar (69, 70) provided at the front face with a locking tooth system (71, 72), which is in mesh, and each half (67, 68) comprises on the inside and at the level of the collar (69, 70) a disc with a through-hole for the screw (4) and at least one receiving bore for the lower projection (65), the positive connection between the nut (5) and the lower engagement piece being achieved by forming the latter with an area which is adapted to the external form of the nut (5).

2. Screwed connection according to claim 1, characterised in that the area of the engagement piece which is adapted to the external form of the nut (5) forms a hexagonal socket.

3. Screwed connection according to claim 1, characterised in that the area of the engagement piece which is adapted to the external form of the nut (5) forms a double hexagon shape.

## Revendications

1. Liaison par vis avec un écrou de blocage par interpénétration par la forme consistant en un entraîneur supérieur, un ressort et un entraîneur inférieur, l'entraîneur supérieur étant relié par interpénétration par la forme à la vis et l'entraîneur inférieur étant relié par interpénétration par la forme à l'écrou, l'entraîneur supérieur et l'entraîneur inférieur étant reliés l'un à l'autre de façon élastique en rotation par l'intermédiaire du ressort et l'entraîneur supérieur pouvant de cette façon tourner de façon relative par rapport à l'entraîneur inférieur ou vice versa ; liaison par vis caractérisée en ce que le ressort (64) présente un nez supérieur (73) et un nez inférieur (65) et l'entraîneur supérieur est formé à partir du nez supérieur (73) qui vient en prise dans un trou de goupille (8) de la vis (4) et l'entraîneur inférieur (66) se compose de deux moitiés (67, 68) de formes géométriques identiques, dont chacune présente une collerette (69, 70) qui est pourvue sur sa face frontale d'une denture de blocage (71, 72) venant mutuellement en prise et chaque moitié (67, 68) présente à l'intérieur à la hauteur de la collerette (69, 70) une rondelle avec un trou de passage pour la vis (4) et au moins un perçage pour recevoir le nez inférieur (65), l'interpénétration par la forme entre l'écrou (5) et l'entraîneur inférieur étant obtenu grâce au fait que celui-ci présente une zone adaptée à la forme extérieure de l'écrou (5).

2. Liaison par vis selon la revendication 1, caractérisée en ce que la zone, adaptée à la forme extérieure de l'écrou (5), de l'entraîneur forme un hexagone en creux.

3. Liaison par vis selon la revendication 1 ou 2, caractérisée en ce que la zone de l'entraîneur adaptée à la forme extérieure de l'écrou (5) présente la forme d'un double hexagone.
